# EUROPEAN PATENT APPLICATION

(11) **EP 4 238 838 A1**
(43) Date of publication of application: **06.09.2023**
(21) Application number: 22159945.9
(22) Date of filing: 03.03.2022
(51) Int. Cl.: B60S 1/56

(54) **DUCT DEVICE, SENSOR HOUSING SYSTEM, SENSOR SYSTEM, VEHICLE**

(71) Applicant: ZF CV Systems Global GmbH, 3006 Bern (CH)
(72) Inventor: BERTOLINA, Guillermo, 1150 Brussels (BE); BOLIK, Thomas, 30559 Hannover (DE); MAGALHAES PEREIRA, Rodrigo, 81673 München (DE); SLOWINSKI, Tomasz, 54-607 Wroclaw (PL); VELDHUIZEN, Roy, 3038AH Rotterdam (NL)
(74) Representative: Rabe, Dirk-Heinrich

(57) **Abstract**

The invention relates to a duct device (100), in particular for a sensor system (400) or for a sensor housing system (200) being adapted to receive a sensor (300), wherein the duct device (100) is adapted for being positioned at an air flow region (AFR) of a vehicle (1000), wherein the duct device (100) comprises: an air duct (110) with a cross-section area (AC) protruding along a duct axis (AD), and the air duct (110) has a receiving section (114) comprising a receiving orifice (116), adapted to receive air (A) that is moving relatively towards the receiving section (114) in a relative movement (MR) and to guide the air (A) in the air duct (110) to form a guided air flow (FL), and has a release section (118) with a release orifice (120), adapted to direct the guided air flow (FL) towards a sensor view region (330) extending from the sensor surface (301), such that the guided air flow (FL) is adapted to prevent contamination (C) on at least one sensor surface (301) of the sensor (300).

## Description

The invention relates in a first aspect to a duct device according to claim 1. The invention further relates in a second aspect to a sensor housing system, in a third aspect to a sensor system and in a fourth aspect to a vehicle.

Sensors are applied in vehicles in large numbers and variety for enabling driving assistance and autonomous driving functions for enhancing the comfort and safety of vehicles. Clean sensor surfaces are a prerequisite for providing said functions.

Different approaches exist for ensuring the cleanliness of sensor surfaces. In particular, devices are available that are adapted to selectively guide pressurized air onto a sensor surface for removing dirt, rain and the like particles that inhibit the sensor view.

DE 10 2017 010 254 A1 discloses a cleaning device for selectively applying a sequence of media consisting of at least one first, in particular gaseous, medium and one second, in particular liquid, medium to a surface, comprising: a nozzle designed for applying a second medium to the surface, a cleaning valve with a retaining connection, a pressure connection, a plunger and a pressure outlet.

Such approaches are beneficial to the reliability of sensors and thus to the safety and comfort of the vehicle, as they enable a regular cleaning, in particular during the operation of the vehicle.

Solutions for ensuring a clean sensor surface can however still be improved, in particular with respect to a reduced complexity, reduced energy consumption and reduced costs.

It is therefore desirable to address at least one of the above problems.

This is where the invention comes in, which has the object of providing a device for ensuring a clean sensor surface, which is improved in particular with respect to a reduced complexity, reduced energy consumption and reduced costs.

In accordance with the invention, the object is solved in a first aspect by a duct device as proposed in claim 1, in particular for a sensor system or for a sensor housing system being adapted to receive a sensor, wherein the duct device is adapted for being positioned at an air flow region of a vehicle, wherein the duct device comprises: an air duct with a cross-section area protruding along a duct axis, and the air duct has a receiving section comprising a receiving orifice.

The receiving orifice is adapted to receive air, in particular that is moving relatively towards the receiving section in a relative movement, and to guide the air in the air duct to form a guided air flow. The air duct further has a release section with a release orifice, adapted to direct the guided air flow, in particular onto the sensor surface (301) and/or towards a sensor view region extending from the sensor surface, such that the guided air flow is adapted to prevent contamination on at least one sensor surface of the sensor.

The invention is based on the finding that clean sensor surfaces are essential to a safe and comfortable operation of the vehicle, as driving assistance and autonomous driving functions of the vehicle rely on signals provided by said sensors.

According to the invention, it was specifically recognized that most of the time when the sensors are needed, the vehicle is in a moving state, i.e. in a driving movement. During the driving movement, a relative movement between the vehicle and the surrounding air is present. The invention has recognized, that this air can be captured by means of a receiving orifice and guided as a guided air flow through an air duct, onto a sensor surface. By doing so, an effective shielding against contamination of the sensor surface through particles, raindrops, dirt and the like is effected without any further source of energy or mechanical cleaning device. In particular, no compressor is needed for generating pressurized air, as the duct device utilizes the guided air flow based on the relative movement.

Further developments of the invention can be found in the dependent claims and show particularly advantageous possibilities to realize above described concept in light of the object of the invention and regarding further advantages.

In preferred developments, the release section is arranged opposite to the receiving section with respect to the duct axis. This means, that the release section is arranged on one axial end of the air duct, and the receiving section is arranged on the other, opposing axial end. Preferably, the air captured by a receiving orifice arranged in the receiving section is guided as a guided air flow through the air duct to the release section.

In a preferred development, it is proposed that the receiving section, in particular the receiving orifice, comprises an increased cross-section area with respect to the cross-section area. Through such reduction from the increased cross-section area to the cross-section area of the air duct, a compression and thus acceleration of the guided air flow is advantageously achieved. Therefore, the guided air flow released at the release orifice due to its increased velocity has an improved shielding and/or cleaning effect.

A preferred development suggests that the cross-section area is decreasing along the duct axis towards the release orifice, in particular in a tapering section, preferably in a continuous manner. In particular, the tapering section connects the receiving section with the rest of the air duct. A continuous decreasing, in particular a conical or truncated pyramid-shaped or the like shaped tapering section, results in advantageous flow characteristics of the guided air flow, in particular with minimized losses caused by turbulences or the like.

Preferably, the cross-section area is decreasing between the receiving section and the release section, more preferable in the tapering section, such that a first cross-section area at a first position is smaller than a second cross-section area at a second position, wherein the second position is closer to the release orifice than the first position.

Preferably, it is proposed that the release orifice is adapted to direct the guided air flow towards and/or along the sensor surface. In developments, where the release orifice is adapted to direct the guided air flow towards, that is onto, the sensor surface, the guided air flow impacts on the sensor surface, allowing to remove dirt or the like particles from the sensor surface. Such removal is an advantageous function of the guided air flow, in particular in addition to the prevention of contamination.

In a further preferred development, it is proposed that the receiving orifice is arranged at a first border zone of the sensor surface and the release orifice is arranged at a second border zone of the sensor surface, wherein the first border zone is arranged opposite of the second border zone with respect to the sensor surface. Preferably, the receiving orifice and the release orifice are arranged such that the guided air flow forms a parallel air curtain which is substantially parallel to sensor surface. Such parallel air curtain is beneficial for shielding the sensor surface from contamination.

Preferably, the receiving orifice is arranged and adapted to fully or partly receive the guided air flow that has been released by the release orifice, in particular in addition to receiving air from an air flow zone in the surrounding environment. Through this, the duct device is adapted to create a recirculating air flow. Preferably, the release orifice and/or the receiving orifice is substantially slot-shaped, more preferably extending along or over the border zone of the sensor surface. Preferably, the release orifice and/or the receiving orifice have a slot shape that is straight or annular.

Preferably, it is proposed that the air duct comprises at least one manifold, adapted to merge or separate at least one guided air flow. With a manifold, it is advantageously possible to connect one receiving orifice with two or more release orifices. By doing so, a multitude of sensor surfaces can be supplied with a guided air flow with only one duct device and/or only one receiving orifice. Also, with a manifold, it is possible to connect two or more receiving orifices with one release orifice. By doing so, the mass flow and/or the pressure of the guided air flow supplied to a sensor surface can be increased for improving the shielding and/or cleaning function.

It is accordingly advantageous that the manifold is adapted to separate the air duct into a first air duct branch for guiding a first guided air flow and into a second air duct branch for guiding a second guided air flow.

Preferably, it is suggested that the first air duct branch comprises a first release section with a first release orifice and the second air duct branch comprises a second release section with a second release orifice, wherein preferably the first release orifice and the second release orifice are adapted to direct the air flow into the sensor review region, more preferably in a colliding manner so as to generate a colliding air curtain. A colliding air curtain implies that at least two guided air flows are directed towards each other by means of their respective release orifices. Preferably, the at least two release orifices are of annular shape to generate a colliding air curtain of conical shape. In developments of the invention, also three or more release orifices assigned to one sensor surface are possible, or an annular orifice, or a circular or contoured slot-shaped nozzle surrounding the sensor surface.

In an advantageous development, a second manifold is proposed, adapted to merge the first air duct branch and the second air duct branch, wherein the first air duct branch comprises the release orifice and a return orifice adapted to at least partially receive the first guided air flow released by the release orifice. In particular, the first air duct branch guides a first guided air flow that is a shielding air flow, and the second duct branch guides a second guided air flow which is a bypass air flow. Through a second, merging manifold the build up and maintenance of the shielding air flow in the sensor view region, in particular of the parallel air curtain, is improved. This is particularly the case since the second, bypass, air flow exerts a drag force on the return orifice, thus creating an under pressure at the return orifice and improving the intake of the guided air flow at the return orifice.

Preferably, a throttle is proposed, in particular arranged in the second air duct branch. With a throttle, the relation of pressure and/or flow rate between the first and second guided airflow can be adjusted. In a preferred embodiment, a connecting section is proposed that is adapted to connect the receiving section with the release orifice or with a manifold or with a sensor housing or with another part of the air duct.

In a second aspect of the invention, a sensor housing system for a vehicle is proposed, comprising a sensor housing adapted to at least partially encase a sensor with at least one sensor surface, wherein the sensor housing system comprises a duct device according to the first aspect of the invention. Preferably, the duct device is attachable or integrally connected to the sensor housing.

In a preferred embodiment of the sensor housing system, a cleaning liquid nozzle is proposed, adapted to guide a cleaning liquid onto the sensor surface and/or into the sensor view region.

In a third aspect of the invention, a sensor system is proposed, comprising a sensor with at least one sensor surface, wherein the sensor system comprises a duct device according to the first aspect of the invention and/or a sensor housing system according to the second aspect of the invention. Preferably, the duct device is attachable to the sensor.

In a fourth aspect of the invention, a vehicle is proposed, in particular a commercial vehicle or a passenger vehicle or a trailer, comprising at least one sensor with a sensor surface and a duct device according to the first aspect of the invention and/or a sensor housing system according to the second aspect of the invention and/or a sensor system according to the third aspect of the invention.

It shall be understood that the duct device according to the first aspect of the invention, the sensor housing system according to the second aspect of the invention, the sensor system according to the third aspect of the invention and the vehicle according to the fourth aspect of the invention comprise identical or similar developments, in particular as described in the dependent claims. Therefore, a development of one aspect of the invention is also applicable to another aspect of the invention.

These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable. The following drawings show in:
- Fig. 1A, Fig. 1B: a first preferred embodiment of a duct device according to the concept of the invention,
- Fig. 2: a second preferred embodiment of a duct device according to the concept of the invention,
- Fig. 3A, Fig. 3B: a third preferred embodiment of a duct device according to the concept of the invention,
- Fig. 4A: a fourth preferred embodiment of a duct device according to the concept of the invention,
- Fig. 4B: a fifth preferred embodiment of a duct device according to the concept of the invention,
- Fig. 5A, Fig. 5B, Fig. 5B: three different kinds of receiving sections for a duct device according to the concept of the invention,
- Fig. 6: a vehicle comprising three duct devices according to the concept of the invention.

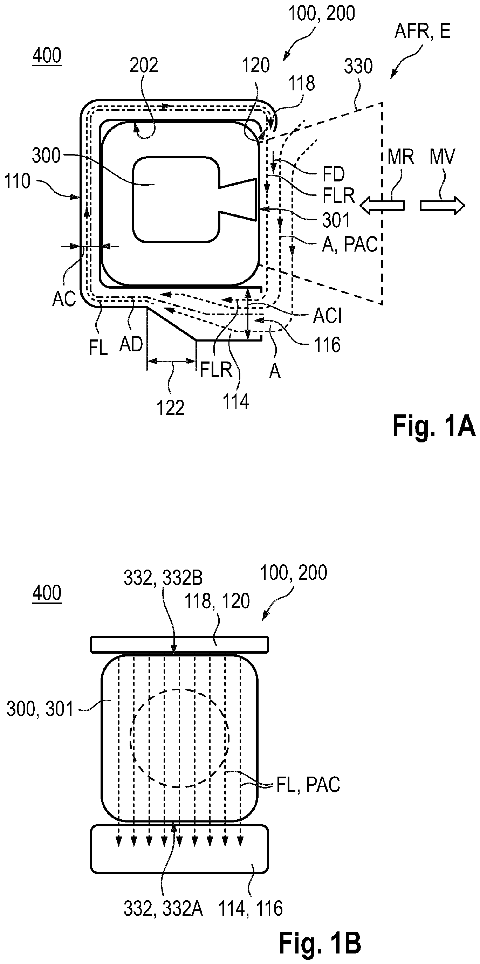

Fig. 1A shows a first preferred embodiment of a duct device 100 according to the concept of the invention for a vehicle 1000 (not shown). The duct device 100 comprises an air duct 110 and is shaped so as to form a sensor housing 202 that is adapted to accommodate a sensor 300 in a fixing manner, yet to allow an unobstructed sensor view region 330 of the sensor 300 towards an environment E of the vehicle 1000. The sensor housing 202 and the duct device 100 together form a sensor housing system 200. The sensor view region 330 describes a part of the environment E which is covered by the sensor 300 in terms of signal acquisition, in particular a spatial region in which the sensor 300 performs its measurements. The sensor view region 330 protrudes from the sensor surface 301 into the environment E, preferably as shown here in a substantially conical manner.

The duct device 100 and the sensor 300 together form a sensor system 400. The sensor system 400 is arranged at the vehicle 1000 in an air flow region AFR. The air flow region AFR is a region of the vehicle that is exposed to surrounding air A of the environment E, in particular such that - as shown here - a relative movement MR of surrounding air A is substantially perpendicular to a sensor surface 301. In other embodiments, the relative movement MR of surrounding air A is not perpendicular to the sensor surface 301, but e.g. in an angle relative to the sensor surface 301. The relative movement MR is caused by a driving movement MV of the vehicle 1000 and is - ignoring any wind speed and direction for the sake of simplification - substantially opposite to the driving movement MV.

The air duct 110 extends along a duct axis AD from a receiving section 114 to a release section 118. The air duct 110 protrudes along the duct axis AD around the sensor 300 so as to form the sensor housing 202, i. e. a receptacle with a confined space in which the sensor 300 can be inserted, in particular such as shown here in a positively locking manner. The air duct 110 further comprises a tapering section 122 that is arranged between the receiving section 114 and the remaining part of the air duct 110. The tapering section 122 is shaped such that it effects a reduction of the cross-section area from an increased cross-section area ACI of the receiving section 114, to a smaller cross-section area AC of the air duct 110.The cross-section area AC is substantially constant between the tapering section 122 and the release section 118.

The receiving section 114 comprises a receiving orifice 116, which is open and thus permits air A from the air flow region AFR to enter the air duct 110. As can be seen from Fig. 1B, the receiving orifice 116 is arranged at a first border zone 332A below the sensor surface 301. The release orifice 120 is arranged at a second border zone 332B, arranged opposed to the first border zone 332A with respect to the sensor surface 301, and thus above said sensor surface 301.

Air A that enters the receiving orifice 116, is directed to the release orifice 118 by means of the air duct 110. Since the release orifice 118 is arranged and adapted such that the guided air flow FL is directed substantially parallel to the sensor surface 301, the guided air flow FL is directed in a parallel manner over the sensor surface 301 back to the receiving orifice 116 as a recirculating air flow FLR. The recirculating air flow FLR is experiencing a drag force FP of new air A being forced towards the receiving orifice 116 by means of the relative movement MR. Incoming air A and the recirculating air flow FLR are merged at the receiving orifice 118 into the guided air flow FL. Due to the slot shaped form of the release orifice 118 and the receiving orifice 116, the guided air flow FL, here in form of the recirculating air flow FLR, is flowing substantially parallel to the sensor surface 301 to form a parallel air curtain PAC which advantageously prevents dirt, dust and the like particles to attach to the sensor surface 301 when the vehicle 1000 is moving in a driving movement MV.

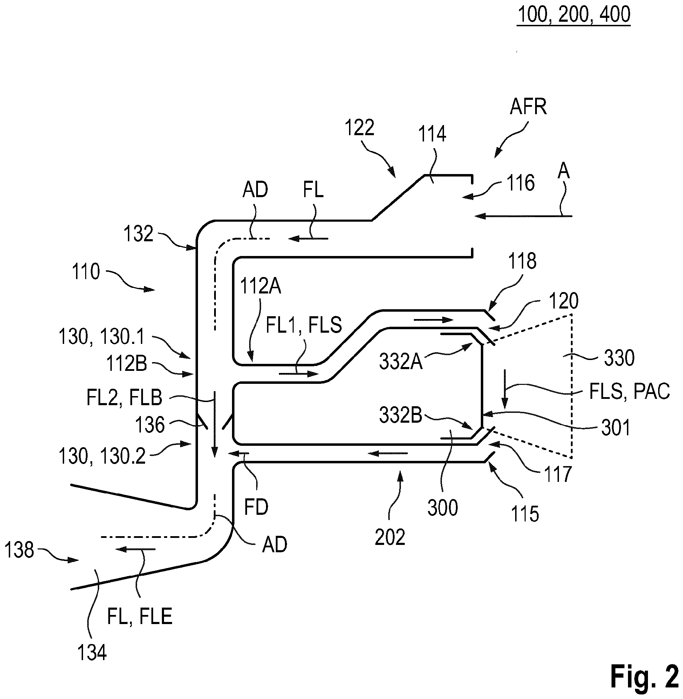

Fig. 2 shows a second preferred embodiment of a duct device 100 and a sensor housing system 200 with a sensor housing 202. The duct device 100 forms a sensor system 400 together with a sensor 300. In comparison to the first embodiment shown in Fig. 1A and Fig. 1B, the duct device 100 of the second embodiment does not establish a recirculating air flow FLR. As a further difference to the first embodiment, the air duct 110 comprises a first manifold 130.1 separating the air duct 110 into a first air duct branch 112A and a second air duct branch 112B, wherein the first manifold 130.1 is adapted to divide the guided air flow FL into a first guided air flow FL1 and a second guided air flow FL2. Analogously to the first embodiment, the receiving section 114 is connected to the air duct 110 by means of a tapering section 122. The first manifold 130.1 is connected to the tapering section 122 by means of a connecting section 132. By means of a connecting section 132, the receiving section 114 can be arranged in a different region of the vehicle 1000 than the sensor housing 202 and the sensor 300, respectively. In particular, the receiving section 114 can be arranged in an air flow region AFR, as shown here. Hence, a connecting section 132 can be applied when a sensor 300 needs to be positioned in a region of the vehicle 1000 where harvesting air A from the environment E is not possible or the conditions for harvesting air A are not as good as in the air flow region AFR.

The first air duct branch 112A connects the first manifold 130.1 to a release section 118 with a release orifice 120, which directs the first guided air flow FL1 through a sensor view region 330 of the sensor 300 to a return orifice 117 of a return section 115 of the first air duct branch 112A, substantially parallel to a sensor surface 301 of the sensor 300. The release orifice 120 and the return orifice 117 have a slot shaped cross-section and are arranged on two opposing border zones 332A, 332B such that a parallel air curtain PAC is formed. The first guided air flow FL1 therefore can be considered a shielding air flow FLS, shielding the sensor surface 301 from contamination by means of the parallel air curtain PAC, analogously to the first embodiment.

The air duct 110 further comprises a second manifold 130.2 that merges the first air duct branch 112A and the second air duct branch 112B. The second duct branch 112B, which connects the first manifold 130.1 and the second manifold 130.2 without passing through the release orifice 120 or the return orifice 117, guides the second guided air flow FL2, which therefore can be considered a bypass air flow FLB. Hence, the first guided air flow FL1 and the second guided air flow FL2 are merged back together to form the guided air flow FL, here an exhaust air flow FLE.

The second air duct branch 112B comprises a throttle 136, adapted to adjust the pressure and/or mass flow of the second guided air flow FL2 in relation to the first guided air flow FL1.

Through the merging of guided air flows FL1, FL2 at the second manifold, the second air flow FL2 can be adjusted, in particular by means of the throttle 136, such that it exerts an under pressure and therefore a drag force FD on the first air flow FL1. Thereby, the flow characteristics of the first air flow FL1 are improved, in particular between the release orifice 120 and the return orifice 117. The air duct 110 comprises, in flow direction of the guided air flow FL after the second manifold 130.2, an exhaust section 134 with an exhaust orifice 138, which releases the exhaust air flow FLE to the environment E. Hence, the exhaust section 134 is arranged on the opposite end of the receiving section 114 of the air duct 110 with respect to the duct axis AD.

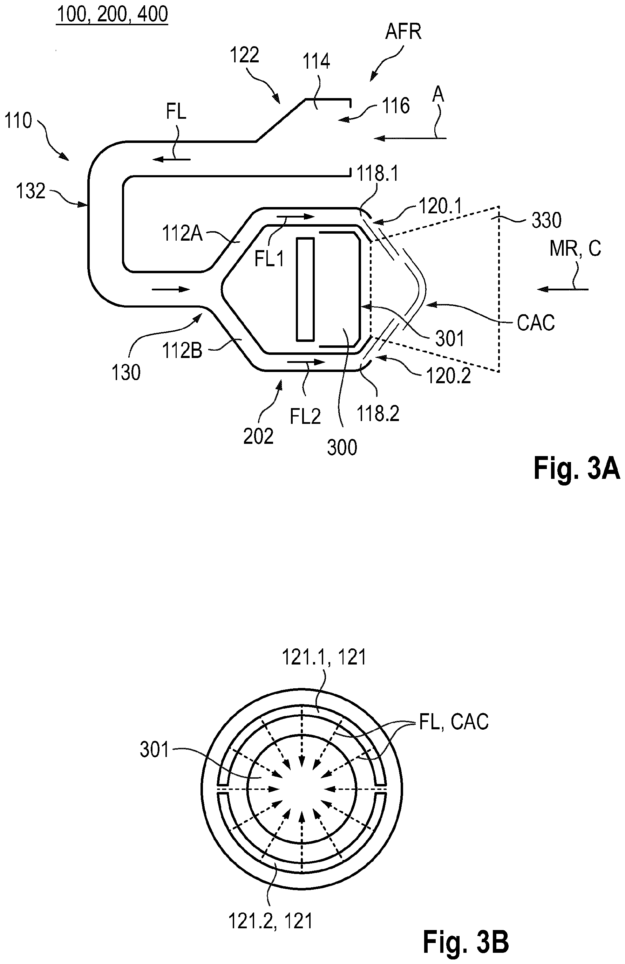

Fig. 3A shows a third preferred embodiment of a duct device 100. The duct device 100 is shaped such as to form a sensor housing 202 of a sensor system 200. The sensor housing 202 is adapted to accommodate a sensor 300, wherein the duct device 100 (with the sensor system 200, respectively) and the sensor 300 form a sensor system 400.

The air duct 110 comprises a receiving section 114, a subsequent tapering section 122 and a subsequent connecting section 132 connecting the tapering section 122 with a manifold 130. The manifold 130 splits the air duct 110 into a first air duct branch 112A and a second air duct branch 112B. Accordingly, the first air duct branch 112A connects to a first release section 118.1 with a first release orifice 120.1, and the second air duct branch 112B connects to a second release section 118.2 with a second release orifice 120.2. Both release orifices 120.1, 120.2 are configured as annular release orifices 121 having a cross-section that is shaped approximately in a ring-shaped manner, wherein each release orifice 120.1, 120.2 approximately occupies half of the circumference of the sensor surface 301, such as visible in Fig. 3B. The release sections 120.1, 120.2 are shaped such that the guided air flows FL1, FL2 are directed into the sensor view region 330 in a conical manner, thus resulting in a conical, colliding air curtain CAC that shields the sensor surface 301 from contamination with dirt, liquids such as rain, and the like particles. The release sections 118.1, 118.2 as well as the release orifices 120.1, 120.2 are shaped and arranged such that the guided air flows FL1, FL2 are directed radially inwards.

In comparison to the first and the second embodiment shown, the air duct 110 of the third embodiment does not re-intake air that has been released once by the release orifices 118.1, 118.2. Therefore, the resulting colliding air curtain CAC does not so much rely on the principle of a laminar stream of air parallel to the sensor surface, such as it is the case with the parallel air curtain PAC of the first and second embodiment, but rather on a collision of one or more guided air streams FL1, FL2, which are directed at each other.

In other embodiments, the first, annular shaped release orifice 120.1 and the second, annular shaped release orifice 120.2 can be combined as a single, annular shaped release orifice.

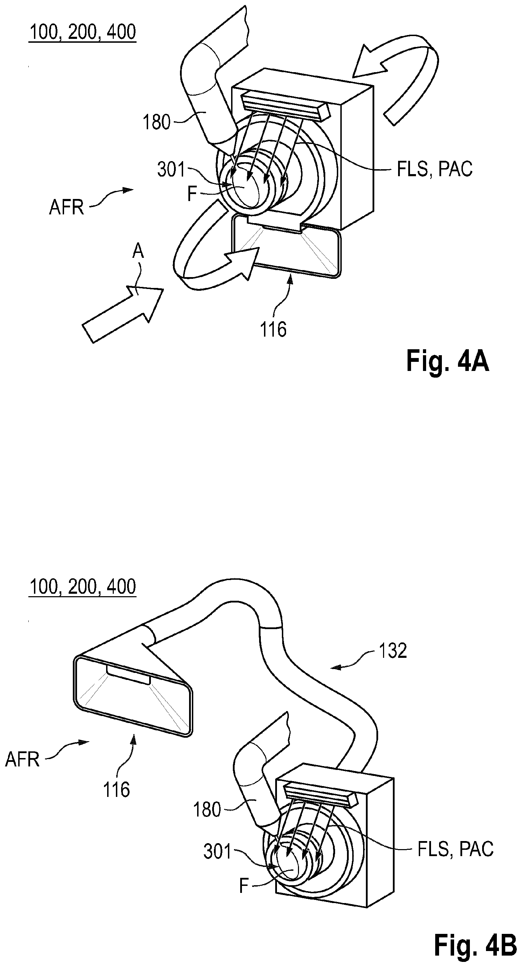

Fig. 4A shows another preferred embodiment of a duct device 100 and a sensor housing system 200 for a sensor system 400, respectively. The embodiment shown corresponds substantially to the first shown embodiment of Fig. 1A and Fig. 1B, however further comprising a cleaning liquid nozzle 180, which is adapted to apply cleaning liquid F onto the sensor surface 301.

Fig. 4B shows a fifth preferred embodiment of a duct device 100 and a sensor housing system 200 for a sensor system 400, respectively, the shown embodiment corresponds substantially to the second embodiment shown in Fig. 2, but further comprises a cleaning nozzle 180, analogously to the fourth embodiment shown previously.

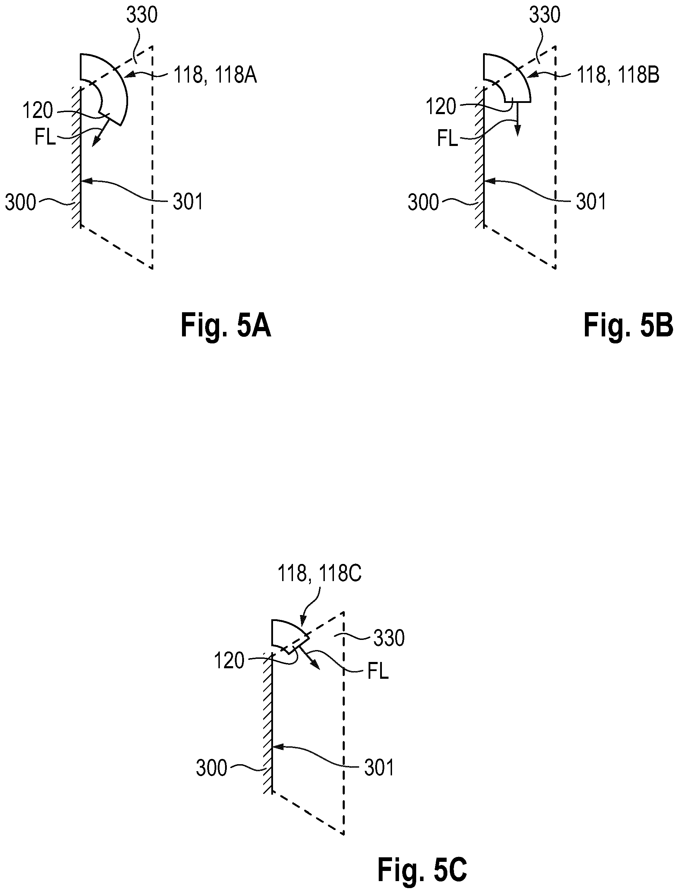

Fig. 5A, Fig. 5B, Fig. 5C show possible release sections 118 for an air duct 110 for any of the previously shown duct devices 100.

In Fig. 5A, a first type of release section 118A is shown, which is shaped such as to guide a guided air flow FL towards the sensor surface 301. In Fig. 5B, a second type of release section 118B is shown, which is shaped such as to guide a guided air flow FL into a sensor view region 330 of a sensor 300, substantially parallel to the sensor surface 301. In Fig. 5C, a third type of release section 118C is shown, which is shaped such as to guide a guided air flow FL away from the sensor surface 301, yet into the sensor view region 330. In embodiments, where the release section 118 is shaped such that the guided air flow FL is not directed towards the sensor surface 301, the guided air flow FL can still effectively prevent contamination, as incoming particles that otherwise would have impacted on the sensor surface 301 during a driving movement MV, are deflected from the sensor surface 301.

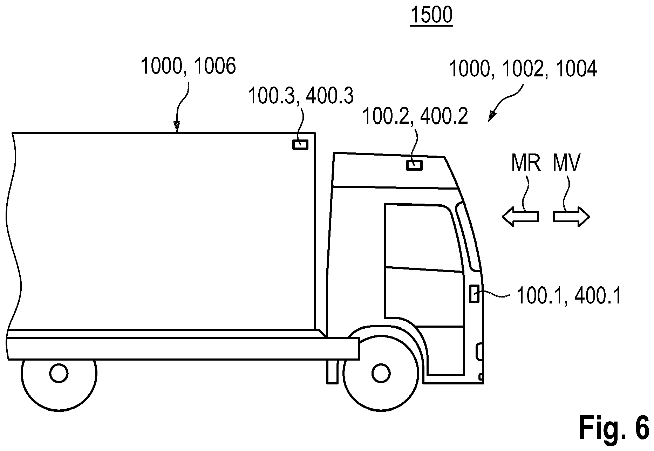

Fig. 6 shows a preferred embodiment of a vehicle 1000 in the form of a commercial vehicle 1002 with a trailer 1006. In other embodiments, the vehicle 1000 can be of any other kind, such as a passenger vehicle 1004 or the like.

Several possible locations of duct devices 100 according to the concept of the invention are exemplarily shown. The vehicle 1000 is adapted to perform a driving movement MV, wherein the relative movement MR of surrounding air. A result, which is used in the duct devices 100 according to the concept of the invention. A first duct device 100.1 for a first sensor system 400.1 is located in a front region of the commercial vehicle 1002, in proximity of the front grill. A second duct device 100.2 for a second sensor system 400.2 is located in an upper region of the commercial vehicle 1002, in proximity of the roof of the cabin. A third duct device 100.3 for a third sensor system 400.3 is located in the upper front region of the trailer 1006. Additionally or alternatively, duct devices 100 according to the concept of the invention can be positioned in a multitude of other possible locations in this vehicle 1000 or other vehicles. Said duct devices 100 can be applied with advantage in any air flow region AFR of a vehicle 1000.

### LIST OF REFERENCE SIGNS (PART OF THE DESCRIPTION)

- 100: duct device
- 100.1-3: first to third duct device
- 110: air duct
- 112A: first air duct branch
- 112B: second air duct branch
- 114: receiving section
- 115: return section
- 116: receiving orifice
- 117: return orifice
- 118: release section
- 118.1, 118,2: first, second release section
- 118A-C: first to third type of release section
- 120: release orifice
- 120.1, 120.2: first, second release orifice
- 121: annular release orifice
- 122: tapering section
- 130: manifold
- 130.1, 130.2: first, second manifold
- 132: connecting section
- 134: exhaust section
- 136: throttle
- 138: exhaust orifice
- 180: cleaning liquid nozzle
- 200: sensor housing system
- 202: sensor housing
- 300: sensor
- 301: sensor surface
- 330: sensor view region
- 332A, 332B: first, second border zone,
- 400: sensor system
- 400.1-3: first to third sensor system
- 1000: vehicle
- 1002: commercial vehicle
- 1004: passenger vehicle
- 1006: trailer

- A: air, surrounding air
- AC: cross-section area of the air duct
- ACI: increased cross-section area, in particular of the receiving section
- AD: duct axis
- AFR: air flow region
- CAC: colliding air curtain
- E: environment
- F: cleaning liquid
- FD: drag force
- FL: guided air flow
- FL1, FL2: first, second guided air flow
- FLB: bypass air flow
- FLE: exhaust air flow
- FLR: recirculating air flow
- FLS: shielding air flow
- FP: drag force
- MR: relative movement
- MV: driving movement
- PAC: parallel air curtain

## Claims

1. Duct device (100), in particular for a sensor system (400) or for a sensor housing system (200) being adapted to receive a sensor (300), wherein the duct device (100) is adapted for being positioned at an air flow region (AFR) of a vehicle (1000), wherein the duct device (100) comprises:
- an air duct (110) with a cross-section area (AC) protruding along a duct axis (AD), and the air duct (110) has
- a receiving section (114) comprising a receiving orifice (116), adapted to receive air (A), in particular that is moving relatively towards the receiving section (114) in a relative movement (MR), and to guide the air (A) in the air duct (110) to form a guided air flow (FL), and has
- a release section (118) with a release orifice (120), adapted to direct the guided air flow (FL), in particular onto the sensor surface (301) and/or towards a sensor view region (330) extending from the sensor surface (301), such that
the guided air flow (FL) is adapted to prevent contamination (C) on at least one sensor surface (301) of the sensor (300).

2. Duct device (100) according to claim 1, **characterized in that**
- the receiving section (114), in particular the receiving orifice (116), comprises an increased cross-section area (ACI) with respect to the cross-section area (AC).

3. Duct device (100) according to claim 1 or 2, **characterized in that**
- the cross-section area (AC) is decreasing along the duct axis (AD) towards the release orifice (120) in a tapering section (122), preferably in a continuous manner.

4. Duct device (100) according to one of the preceding claims, **characterized in that**
- the release orifice (120) is adapted to direct the guided air flow (FL) towards and/or along the sensor surface (301).

5. Duct device (100) according to one of the preceding claims, **characterized in that**
- the receiving orifice (116) is arranged at a first border zone (332A) of the sensor surface (301) and the release orifice (118) is arranged at a second border zone (332B) of the sensor surface (301), wherein
- the first border zone (332A) is arranged opposite of the second border zone (332B) with respect to the sensor surface (301).

6. Duct device (100) according to one of the preceding claims, **characterized in that**
- the air duct (110) comprises at least one manifold (130, 130.1, 130.2), adapted to merge or separate at least one guided air flow (FL).

7. Duct device (100) according to claim 6, **characterized in that**
- the manifold (130) is adapted to separate the air duct (110) into a first air duct branch (112A) for guiding a first guided air flow (FL1) and into a second air duct branch (112B) for guiding a second guided air flow (FL2).

8. Duct device (100) according to claim 6 or 7, **characterized in that**
- the first air duct branch (112A) comprises a first release section (118.1) with a first release orifice (120.1) and the second air duct branch (112B) comprises a second release section (118.2) with a second release orifice (120.2).

9. Duct device (100) according to claim 6 or 7, **characterized in that** the air duct (110) further comprises:
- a second manifold (130.2), adapted to merge the first air duct branch (112A) and the second air duct branch (112B), wherein
- the first air duct branch (112A) comprises the release orifice (120) and a return orifice (117) adapted to at least partially receive the first guided air flow (FL1) released by the release orifice (120).

10. Duct device (100) according to one of the preceding claims, **characterized in that** the air duct (110) further comprises:
- a throttle (136), preferably arranged in the second air duct branch (112B).

11. Sensor housing system (200) for a vehicle (1000), comprising a sensor housing (202) adapted to at least partially encase a sensor (300) with at least one sensor surface (301), wherein the sensor housing system (200) comprises a duct device (100) according to one of the preceding claims, preferably the duct device (100) being attachable to the sensor housing (202).

12. Sensor system (400) comprising a sensor (300) with at least one sensor surface (301), wherein the sensor system (300) comprises a duct device (100) according to one of claims 1 to 10, preferably the duct device (100) being attachable to the sensor.

13. Vehicle (1000), in particular commercial vehicle (1002) or passenger vehicle (1004) or trailer (1006), comprising at least one sensor (300) with a sensor surface (301) and a duct device (100) according to one of claims 1 to 9 and/or a sensor housing system (200) according to claim 10 and/or a sensor system (200) according to claim 11.
